# EUROPÄISCHE PATENTANMELDUNG

(11) **EP 1 157 735 A2**
(43) Veröffentlichungstag der Anmeldung: **28.11.2001**
(21) Anmeldenummer: 01250181.3
(22) Anmeldetag: 23.05.2001
(51) Int. Cl.: B01D 71/02

(54) **Verfahren zur Herstellung von Molekularsieb-Membranen auf porösen Trägern**

(30) Priorität: 26.05.2000 DE 10027685
(71) Anmelder: Institut für Angewandte Chemie Berlin-Adlershof E.V., 12489 Berlin (DE)
(72) Erfinder: Noack, Manfred, 12683 Berlin (DE); Kölsch, Peter, 10367 Berlin (DE); Weh, Cornelia, 12489 Berlin (DE); Schäfer, Ronald, Dr., 12487 Berlin (DE); Caro, Jürgen, Dr., 13129 Berlin (DE)
(74) Vertreter: Walter, Wolf-Jürgen

(57) **Zusammenfassung**

Die Erfindung betrifft die Herstellung von Molekularsieb-Membranen auf porösen Trägern zur Trennung gasförmiger oder flüssiger Stoffgemische nach ihrer Größe oder Wechselwirkung. Erfindungsaufgabe ist eine kostengünstigere Herstellung geträgerte Molekularsieb-Membranen in kürzerer Zeit. Es werden an der Porenoberfläche eines offenporigen Trägers Keimkristalle des Zeolith-Typs NaA, NaX, NaY, ZSM-5, Mordenit, Erionit, MCM 22 oder MCM 58 als kolloidale Lösung mit Teilchengrößen von 60-100 nm abgelagert und thermisch bei 350 bis 550 °C fixiert. Der mit den Keimkristallen bedeckte Träger wird mit einer Syntheselösung, deren Zusammensetzung bezogen auf die Oxide von Si, A1, Na und K der Zusammensetzung der gewünschten Kristalltypen entspricht, bei einer Temperatur im Bereich von 80 bis 200 °C bei autogenem Druck durch Einstrahlen von Mikrowellen der Wellenlänge 2,45 GHz für 0,2 bis 3 Stunden behandelt bis zur Bildung einer entsprechenden Zeolith-Kristallschicht.

## Beschreibung

Molekularsieb-Membranen werden auf porösen keramischen oder metallischen Trägern durch in situ-Kristallisation oder durch Aufbringen von Keimkristallen und nachfolgende Schichtsynthese erzeugt. Sie dienen u.a. zur Trennung gasförmiger oder flüssiger Stoffgemische nach ihrer Größe oder Wechselwirkung (Adsorption, Diffusion).

Die Anwendung von Keimkristallen zur Bildung von Molekularsiebschichten auf porösen Trägern ist umfassend untersucht und wird für die Bildung von Molekularsieb-Membranen der Typen A, X, Y und ZSM-5/Silikalith aus wässrigen Lösungen angewendet (z.B. Advanced Techniques in Catalyst Preparation by W. Moser (ed.), Academic Press, 1996; US-A-5.554.286). Keimkristalle können jedoch auch durch physikalische Methoden wie Sputtern, Laserablation, CVD- und PVD-Techniken in der Gasphase auf Träger aufgebracht werden.

Weiterhin ist bekannt, dass sich wässrige aluminiumreiche Reaktionsgemische unter Einwirkung von Mikrowellenstrahlung der Wellenlänge 2,45 GHz rasch erwärmen. Deshalb kann die Synthese von Molekularsieben z. B. der Typen A, X oder Y und ZSM-5, MCM 22, MCM 58 vorteilhaft in der Mikrowelle durchgeführt werden (z.B. Adv. Mater. 7 (1995) 711; JP-A-11209120; Adv. Mater. 12 (2000) 3).

Nachteilig bei den bekannten Verfahren nach dem Keimkristall-Prinzip sind die langen Behandlungszeiten bei erhöhter Temperatur und die Notwendigkeit, daß die Syntheselösung gealtert werden muß.

Der vorliegenden Erfindung liegt die Aufgabe zugrunde, unter Einsatz bekannter Techniken in kürzerer Zeit und kostengünstiger geträgerte Molekularsieb-Membranen herzustellen.

Erfindungsgemäß ist das Verfahren zur Herstellung von Molekularsieb-Membranen auf porösen Trägern, dadurch gekennzeichnet, daß
an der Porenoberfläche eines offenporigen Trägers Keimkristalle des Zeolith-Typs NaA, NaX, NaY, ZSM-5, Mordenit, Erionit, MCM 22 oder MCM 58 als kolloidale Lösung mit Teilchengrößen von 60-100 nm abgelagert und thermisch bei 350 bis 550 °C fixiert werden, und der mit den Keimkristallen bedeckte Träger mit einer Syntheselösung, deren Zusammensetzung bezogen auf die Oxide von Si, Al, Na und K der Zusammensetzung der gewünschten Kristalltypen entspricht, bei einer Temperatur im Bereich von 80 bis 200 °C bei autogenem Druck durch Einstrahlen von Mikrowellen der Wellenlänge 2,45 GHz für 0,2 bis 3 Stunden behandelt wird bis zur Bildung einer Kristallschicht von Zeolithen entsprechend des Keimkristalltyps wenigstens an der Oberfläche des Trägers.

Die Keimkristalle werden in einem gesonderten Syntheseverfahren hergestellt, gewaschen und vorzugsweise als ca. 1 - 4 Gew-% kolloidale Lösung mit 60 - 100 nm Teilchen zur Trägerbedekkung verwendet. Die Ablagerung erfolgt mittels elektrostatischer Wechselwirkung oder durch Druckimprägnierung in wässriger oder anderer Phase auf dem Träger oder durch eine Kombination von elektrostatischer Wechselwirkung und Druckimprägnierung. Der Keimkristall-bedeckte poröse Träger wird anschließend auf 350 bis 550 °C, vorzugsweise 400 bis 480 °C, aufgeheizt, wodurch die auf der Membranoberfläche bzw. der Porenoberfläche abgelagerten Keimkristalle des jeweiligen ausgewählten Zeolithtyps fixiert werden.

Es ist auch möglich, die Keimkristalle über die Gasphase mittels Sputtern, Laserablation oder CVD- und PVD-Verfahren auf der äußeren Oberfläche des Trägers zu fixieren.

Der mit den Keimkristallen bedeckte Träger wird dann in einem mit Teflon ausgekleideten Reaktionsgefäß mit der dem Kristalltyp entsprechenden Syntheselösung überschichtet, und bei erhöhter Temperatur unter autogenem Druck erfolgt ausgehend von den Keimkristallen die Kristallisation der MolekularsiebMembran, wobei die Syntheselösung durch Einstrahlen von Mikrowellen der Wellenlänge von 2,45 GHz erwärmt wird.

Unter dem Begriff "Syntheselösung, deren Zusammensetzung bezogen auf die Oxide von Si, Al, Na und K der Zusammensetzung der gewünschten Kristalltypen entspricht" werden Syntheselösungen verstanden mit einer Formel, wie sie aus der einschlägigen Literatur [z.B. Verified Syntheses of Zeolitic Materials, Special Issue of Microp. Mesop. Materials, Vol. 22/4-6 (1998), Elsevier, Ed. H. Robson for Synthesis Commission of Intern. Zeol.Assoc.] für die Herstellung des jeweiligen Kristalltyps bekannt ist. Diese Zusammensetzung liegt z.B. für einen Zeolith vom Typ NaA im Bereich von

2 SiO₂ : Al₂O₃ : (2,5-4,0) Na₂O : (120-200) H₂O

und für einen Zeolith vom Typ ZSM-5 im Bereich von

(80-120) SiO₂ : (1-3) Al₂O₃ : (5-30) Na₂O : (0-25) (TPA)₂O : (1000-4000) H₂O.

Dabei ist TPA die Abkürzung für Tetrapropylammonium, das ein häufig verwendetes Templat-Molekül darstellt.

Überraschenderweise hat sich gezeigt, daß bei bestimmten Zeolithsystemen, wie sie erfindungsgemäß als Keimkristalle eingesetzt werden, durch die Fixierung dieser Keimkristalle auf der Trägeroberfläche und nachfolgender Anwendung der Mikrowellentechnik zur Erwärmung einer dem Keimkristall qualitativ entsprechenden Syntheselösung, die Ausbildung einer sehr dünnen aber voll funktionsfähigen und gleichmäßigen Schicht von entsprechenden Zeolithkristallen auf der Trägeroberfläche erfolgt.

Im Unterschied zum bekannten Stand der Technik verkürzt sich dabei die Kristallisationszeit von 12 - 72 h bei konventionellem Heizen auf 0,2 - 3 h bei der Mikrowellenanwendung. Ferner muß die Syntheselösung nicht mehr gealtert werden. Durch Einsatz von Keimkristallen sind erfolgreich Systeme kristallisierbar, deren Keimbildungsgeschwindigkeit gering ist, bei denen ohne Keimkristall-Anwendung die Mikrowellenstrahlung allein keinen wesentlichen Vorteil ergibt.

Da sich die Keimkristalle auf / im Träger, dem Ort des gewünschten Kristallwachstums befinden, erfolgt die Kristallisation überwiegend auf / im Träger und es bilden sich nur wenige freie Kristalle im Lösungsvolumen. Dieser Kristallisationsmechanismus gewährleistet deshalb einen effektiven Materialeinsatz, es entstehen in der Größe sehr einheitliche Kristallite, und die Orientierung anisotroper Kristalle in der Molekularsiebschicht wird beeinflußt.

Ein weiterer Vorteil besteht darin, daß die Kristallisation nicht wiederholt werden muß, da bereits nach einmaligem Verfahrensdurchlauf bei den entsprechenden Parametern eine voll funktionsfähige Schicht gebildet worden ist.

Die Kristallbildung erfolgt wenigstens auf der Oberfläche des Trägers, vorteilhaft jedoch auch im Inneren des Trägers und bevorzugt durchgehend auf den Oberflächen aller Poren des offenporigen Trägers, wodurch bei der Permeation eine höhere Selektivität erreicht wird.

Die von außen eingestrahlte Mikrowellenenergie fällt exponentiell mit dem Abstand vom äußeren Rand des Reaktionsgefäßes ab. Deshalb ist die Präparation von Molekularsieb-Membranen auf Rohrträgern besonders günstig, wenn der Trägerdurchmesser nahe dem Durchmesser des Reaktionsgefäßes ist. Durch die sich einstellende radiale Temperaturverteilung erfolgt die Kristallisation verstärkt im Trägerbereich und wenig im freien Volumen im Inneren der Reaktionslösung.

Der Träger kann eine kommerziell verfügbare keramische Mikrofiltrations-Membran oder ein poröser Körper aus Kohlenstoff oder nichtoxidischer Keramik mit Poren von 5 - 3000 nm sein, vorzugsweise bestehend aus Al₂O₃, SiO₂, ZrO₂, TiO₂ oder ähnlichen Oxiden oder deren Gemischen, die ein offenporiges Gefüge besitzen und als flache Scheibe oder als Ein- oder MultikanalRohr oder als Kapillare vorliegen.

Bevorzugt werden solche Träger eingesetzt, die einen asymmetrischen Schichtaufbau haben. Unter dem Begriff "asymmetrischer Schichtaufbau" wird ein Aufbau verstanden, der ausgehend vom grobporigen Grundkörper eine zu einer Seite hin abnehmende Porengröße hat, so daß die Poren an der Oberfläche der äußersten Schicht einer Seite den kleinsten Durchmesser aufweisen. In diesem Fall werden die Keimkristalle bevorzugt auf der feinporigen Seite des Trägers abgeschieden.

Der Träger wird vor der Keimkristall-Bedeckung gründlich entfettet durch
- Brennen in Luft bei Temperaturen oberhalb von 450°C oder
- Plasmaätzen mit Sauerstoff (bei Flachträgern) oder
- Chemische Entfettung mittels Oxidation mit H₂O₂ wechselnd im sauren und alkalischen p_{H}-Bereich.

An den bei 120°C getrockneten, entfetteten Trägern werden die Keimkristalle durch elektrostatische Wechselwirkung angeheftet durch
- Umladung des Trägers mit einem kationischen Polymer oder Tensid oder
- P_{H}-abhängige gegensätzliche Einstellung des zeta-Potentials von Träger und Keimkristallen
oder es erfolgt ein Anheften durch physikalische Auftragstechniken aus der Gasphase wie Sputtern, Laserablation, CVD- und PVD-Methoden.

Als kationische Polymere können wasserlösliche aliphatische quaternäre Polyamine eingesetzt werden, wie Diallyldimethylmammoniumchlorid oder Redifloc 4150® .

Das kationische Polymer bewirkt dabei eine positive, kationische Ladung auf dem Träger, so daß die nachfolgend eingebrachten anionischen Keimkristalle an den kationischen Stellen des Trägers haften bleiben.

Um die Keimkristalle in den Poren eines makroporösen Trägers an deren Oberfläche noch besser anzulagern, wird vorzugsweise die Oberfläche des Trägers gegensätzlich zum Keimkristall geladen und die kolloidale Keimkristalllösung durch äußeren Druck von 1 bis 5 bar durch das Porensystem gepreßt. Die Keimkristalle werden dann durch die thermische Nachbehandlung bei z.B. 450°C in Luft an der Oberfläche der Poren umfassend fixiert.

Nach dem Einbringen der entsprechenden Syntheselösung in Abhängigkeit vom vorgegebenen Keimkristalltyp wird zur Erwärmung der Autoklav in einen steuerbaren Labormikrowellenofen gestellt. Nach Beendigung des Mikrowellenheizens wird der Autoklav schnell abgekühlt (ca. 5-10 K/min), um die Abscheidung kristalliner Fremdphasen zu unterbinden.

Der Träger mit der Molekularsiebschicht wird entnommen, gewaschen und langsam bei Temperaturen bis 120°C getrocknet. Die Membran des MFI-Typs muß noch in Luft thermisch bei 450°C nachbehandelt werden, um die Transportwege vom organischen Templatmolekül (TPA)₂O zu befreien.

Die Molekularsieb-Membranen sind geeignet zur Trennung flüssiger oder gasförmiger Gemische von polaren und unpolaren Molekülen mit einem kinetischen Moleküldurchmesser zwischen 0,3 - 0,9 nm, wobei eine Komponente auch kleiner oder größer als der angegebene Bereich sein kann.

Gegenstand der Erfindung ist auch eine Molekularsiebmembran auf einem porösen Träger, gekennzeichnet durch eine sehr dünne Schicht von 1000 bis 5000 nm eines Zeolith-Kristalltyps, ausgewählt aus der Gruppe, bestehend aus NaA, NaX, NaY, ZSM-5, Mordenit, Erionit, MCM 22 und MCM 58, mit einer einheitlichen Kristallitgröße kleiner als oder gleich der Schichtdicke von 1-5 *µ*m, mit Poren von 0,2 bis 0,9 nm und mit unterschiedlich polarer Oberfläche und hergestellt durch Fixierung von Keimkristallen eines entsprechenden Zeolithtyps auf dem Träger bei 350-550 °C und anschließender Mikrowellenbehandlung des Trägers, der mit einer dem Keimkristalltyp hinsichtlich der Zusammensetzung qualitativ entsprechenden Syntheselösung überschichtet ist, bei 80 bis 200 °C, autogenem Druck und für 0,2 bis 3 Stunden bei einer Wellenlänge von 2,45 GHz.

In diesem Zusammenhang bedeutet "unterschiedlich polar" eine durch die Al₂O₃-Tetraeder hervorgerufene negative Ladung, die durch Kationen oder Gitter-OH-Gruppen kompensiert wird.

Die Erfindung wird anschließend an Beispielen erläutert.

### Beispiel 1

Eine Mikrofiltrations-Flachmembran aus TiO₂ mit 200 nm Poren wird bei Raumtemperatur durch Tränkung mit einer 0,5 Gew-%-igen Lösung des kationischen Polymers Diallyldimethylammoniumchlorid behandelt und anschließend in einer 1 Gew-%igen kolloidalen Lösung von 60 - 100 nm großen NaA-Keimkristallen mit diesen monolagig bedeckt. Nach dem Spülen und Trocknen wird das Polymer bei 450°C in Luft ausgebrannt. Der so vorbehandelte Träger wird in einem Gefäß aus Teflon oder Polypropylen (PP) mit einer Syntheselösung der molaren Zusammensetzung

2 SiO₂ : Al₂O₃ : (2,5-4,0) Na₂O : (120-200) H₂O

überschichtet und in einem Mikrowellenofen einer Leistung von 1 kW bei 2,45 GHz zwischen 8-30 min auf 95°C erhitzt. Nach raschem Abkühlen, Spülen und Trocknen zeigt die entstandene NaA-Flachmembran bei der Trennung von einem Wasser/i-Propanol-Gemisch (1:1) bei 80°C einen Fluß zwischen 2,5-4,5 kg/m² h und einen Trennfaktor α _{H2O/i-Propanol} von 500 - 1000.

Eine vergleichbare Membran entsteht auf dem Keimkristall-bedeckten Träger in gleicher Syntheselösung bei konventionellem Heizen in einem Wärmeschrank in 4-10 h.

### Beispiel 2

Eine Mikrofiltrations-Flachmembran aus Al₂O₃ mit 60 nm Poren wird bei Raumtemperatur mit dem kationischen Polymer Redifloc 4150 von AKZO-Nobel (wasserlösliches aliphatisches quarternäres Polyamin) durch Tränkung mit einer 0,5 Gew-%igen Lösung behandelt und anschließend in einer ca 1 Gew-%igen kolloidalen Lösung von 50 - 80 nm großen NaX-Keimkristallen mit diesen monolagig bedeckt. Nach Spülung mit destilliertem Wasser und Trocknen wird das Polymer bei 450°C in Luft ausgebrannt und gleichzeitig die Keimkristalle auf dem Träger fixiert. Der so vorbehandelte Träger wird in einem Gefäß aus Teflon, PE oder PP mit der Syntheselösung folgender molarer Zusammensetzung überschichtet

(3-10) SiO₂ : (1) Al₂O₃ : (4-15) Na₂O : (150-600) H₂O.

Die Synthese der Molekularsiebschicht erfolgt in einem Mikrowellenofen einer Leistung 1 kW bei 2,45 GHz zwischen 100-120°C in 0,2-3 h. Dabei entsteht eine geschlossene Kristallschicht von 500-6000 nm Dicke. Nach schnellem Abkühlen, Spülen und langsamem Trocknen zeigt die entstandene NaX-Flachmembran folgende Permselektivitäten (PS) als Verhältnis der Einzelgasflüsse.

PS _{H2/CH4} = 4,4 ; PS _{H2/n-Butan} = 10,8 ; PS _{H2/SF6} = 20,6 ,

die alle deutlich über dem Knudsen-Faktor dieser Stoffkombinationen liegen.

Eine vergleichbare Membran entsteht bei konventionellem Heizen in einem Wärmeschrank in 20-72 h. Ohne den Einsatz von angehefteten Keimkristallen verläuft die Kristallisation überwiegend im Lösungsvolumen, und die Syntheselösung muß vor der Kristallisation 24 h gealtert werden.

### Beispiel 3

Einkanal-Rohre aus Al₂O₃ mit Poren von 1000 nm werden von innen mit einer kolloidalen Lösung von MFI-Keimkristallen der Größe 80 - 120 nm unter einem Druck von 2 bar imprägniert. Nach dem Trocknen bei 120°C werden die Keimkristalle bei 450°C im Porensystem des Rohres fixiert. Der so vorbehandelte Rohrträger wird in einem druckfesten Gefäß mit Teflonauskleidung in die Syntheselösung folgender molarer Zusammensetzung gestellt

(80-120) SiO₂ : (1-3) Al₂O₃ : (5-30) Na₂O : (0-25) (TPA)₂O : (1000-4000) H₂O

und in einem Mikrowellenofen einer Leistung von 1 kW bei 2,45 GHz zwischen 0,5-3 h auf 170-190°C erhitzt. Die entstehende ZSM-5-Membran mit einem Si/Al-Verhältnis von 15 ist ca. 3000 nm dick und bereits nach dem Trocknen transportaktiv, wenn kein (TPA)₂O bei der Synthese eingesetzt wurde. Falls Templat in der Synthese verwendet wurde, muß dieses bei 450°C in Luft ausgebrannt werden.

Die ZSM-5-Molekularsieb-Membran ist hydrophil und zur Trennung flüssiger und gasförmiger Gemische geeignet. An ihr wird ein Wasser / i-Propanol-Gemisch von 5:95 mit einem Trennfaktor α _{H2O/i-Propanol} = 500 bei 80°C getrennt. Für ein 1:1 Gemisch aus Wasserstoff und n-Butan wurde bei 70°C ein Trennfaktor α _{H2/n-Butan} = 99 ermittelt.

Bei konventionellem Heizen in einem Wärmeschrank erfordert die gleichartige Molekularsieb-Schichtbildung 24-72 h. Ohne Anwendung von Keimkristallen entstehen bei einmaliger Synthese keine geschlossenen Kristallschichten, und es werden im Lösungsvolumen viele freie Kristalle gebildet.

## Patentansprüche

1. Verfahren zur Herstellung von Molekularsieb-Membranen auf porösen Trägern,
**dadurch gekennzeichnet, daß**
an der Porenoberfläche eines offenporigen Trägers Keimkristalle des Zeolith-Typs NaA, NaX, NaY, ZSM-5, Mordenit, Erionit, MCM 22 oder MCM 58 als kolloidale Lösung mit Teilchengrößen von 60-100 nm abgelagert und thermisch bei 350 bis 550 °C fixiert werden, und der mit den Keimkristallen bedeckte Träger mit einer Syntheselösung, deren Zusammensetzung bezogen auf die Oxide von Si, Al, Na und K der Zusammensetzung der gewünschten Kristalltypen entspricht, bei einer Temperatur im Bereich von 80 bis 200 °C bei autogenem Druck durch Einstrahlen von Mikrowellen der Wellenlänge 2,45 GHz für 0,2 bis 3 Stunden behandelt wird bis zur Bildung einer Kristallschicht von Zeolithen entsprechend des Keimkristalltyps wenigstens an der Oberfläche des Trägers.

2. Verfahren nach Anspruch 1, **dadurch gekennzeichnet, daß** die Keimkristalle auf eine keramische Membran, einen porösen Körper aus Kohlenstoff oder oxidischer oder nichtoxidische Keramik aufgebracht werden, die jeweils Poren im Bereich von 5 bis 3000 nm aufweisen.

3. Verfahren nach Anspruch 2, **dadurch gekennzeichnet, daß** die Keimkristalle auf Träger aus Al₂O₃, SiO₂, ZrO₂, TiO₂ oder Gemischen davon aufgebracht werden.

4. Verfahren nach Anspruch 1, **dadurch gekennzeichnet, daß** die Keimkristalle auf einen Träger aufgebracht werden, der eine flache Scheibe, ein Einkanalrohr, ein Multikanalrohr oder eine Kapillare ist.

5. Verfahren nach Anspruch 1, **dadurch gekennzeichnet, daß** die Keimkristalle auf einen Träger aufgebracht werden, der einen asymmetrischen Schichtaufbau hat.

6. Verfahren nach Anspruch 1, **dadurch gekennzeichnet, daß** die Keimkristalle auf dem Träger angeheftet werden durch Umladung des Trägers mit einem kationischen Polymer oder pH-abhängige zeta-Potentialeinstellung, Einbringen der Keimkristalle in den Träger und anschließender thermischer Behandlung.

7. Molekularsiebmembran auf einem porösen Träger, **gekennzeichnet durch** eine sehr dünne Schicht von 1000 bis 5000 nm eines Zeolith-Kristalltyps, ausgewählt aus der Gruppe, bestehend aus NaA, NaX, NaY, ZSM-5, Mordenit, Erionit, MCM 22 und MCM 58, mit einer einheitlichen Kristallitgröße kleiner als oder gleich der Schichtdicke von 1-5 *µ*m, mit Poren von 0,2 bis 0,9 nm und mit unterschiedlich polarer Oberfläche und hergestellt **durch** Fixierung von Keimkristallen eines entsprechenden Zeolithtyps auf dem Träger bei 350-550 °C und anschließender Mikrowellenbehandlung des Trägers, der mit einer dem Keimkristalltyp hinsichtlich der Zusammensetzung qualitativ entsprechenden Syntheselösung überschichtet ist, bei 80 bis 200 °C, autogenem Druck und für 0,2 bis 3 Stunden bei einer Wellenlänge von 2,45 GHz.
